# EUROPEAN PATENT SPECIFICATION

(11) **EP 1 595 246 B1**
(45) Date of publication and mention of the grant of the patent: **09.04.2008**
(21) Application number: 04703454.1
(22) Date of filing: 20.01.2004
(51) Int. Cl.: G10L 19/00, G10L 19/02, G06T 1/00, H04N 7/24, G11B 20/00

(54) **SIGNAL WATERMARKING**
WASSERZEICHEN VON SIGNALEN
MARQUAGE EN FILIGRANE DE SIGNAUX

(30) Priority: 07.02.2003 EP 03100259
(43) Date of publication of application: 16.11.2005
(73) Proprietor: Koninklijke Philips Electronics N.V., 5621 BA Eindhoven (NL)
(72) Inventor: VAN DER VEEN, Minne, NL-5656 AA Eindhoven (NL); LEMMA, Aweke, N., NL-5656 AA Eindhoven (NL); APREA, Javier, F., NL-5656 AA Eindhoven (NL); BRUEKERS, Alphons, A., M., L., NL-5656 AA Eindhoven (NL)
(74) Representative: Groenendaal, Antonius W. M.
(86) International application number: PCT/IB2004/050036
(87) International publication number: WO 2004/070704

(56) References cited:
- EP-A- 0 508 581
- EP-A- 0 812 070
- US-A1- 2001 044 899
- US-A1- 2001 054 150
- M ETOH ET AL: "Closed loop optimization of image coding using subjective error criteria" IEEE INTERNATIONAL CONFERENCE ON ACOUSTICS, SPEECH, AND SIGNAL PROCESSING (ICASSP), 7 May 2001 (2001-05-07), pages 1717-1720, XP010802870
- T CHEN: "The Past, Present, and Future of Speech Processing" IEEE SIGNAL PROCESSING MAGAZINE, May 1998 (1998-05), pages 24-48, XP011089806
- T PAINTER ET AL: "Perceptual Coding of Digital Audio" PROCEEDINGS OF THE IEEE, April 2000 (2000-04), pages 451-513, XP011044355

## Description

This invention relates to the processing of information signals such as the embedding of watermarks in an information signal.

Within the field of signal processing of information signals, such as audio signals, video signals or the like, it often is a problem to achieve a suitable trade-off between the desired effect of that processing and the general aim of not introducing perceivable distortions into the signal. Examples of signal processing include the coding of information signals and the embedding of watermarks in information signals.

Within the field of audio coding, an efficient encoding of an audio signal is desired without unduly degrading the perceptual quality of the audio signal when reconstructed from the encoded signal.

Within the field of watermarking it is a general problem of controlling the tradeoff between the robustness of an embedded watermark and its transparency: On the one hand, it is desirable to obtain an embedded watermark which is robust against signal processing, such as coding, compression, etc. On the other hand, the embedded watermark should not modify the host signal in a way that causes perceivable distortions, e.g. audible or visible distortions. Hence, the perceptual quality of the information signal should not be affected.

In particular, many watermarking schemes for audio signals use masking models of the human auditory system where a masking threshold is determined corresponding to a maximum allowable embedding strength that still ensures an inaudible embedding. Hence, the amount of watermark energy to be added to a host audio signal is determined by the amount of noise that can be masked by the signal. This headroom is generally referred to as the mask-to-noise ratio.

Most watermarking systems use a certain embedding model to determine the mask-to-noise ratio and to control the watermarking generation or the mixing of the watermark into the host signal. One may describe this as a two stage process: a) determine the headroom available for embedding a watermark and b) derive and apply a certain cost function to the watermark generation and mixing stages. Both of these stages are part of the so-called watermark embedding model.

US patent no. 6,345,100 discloses a method of embedding a watermark in an audio signal. The method comprises determining a basis signal from the audio signal the inclusion of which would be imperceptible by a human listener. A watermark is embedded into the basis signal and the resulting watermark signal is mixed into the audio signal.

US patent publication US2001/0044899 discloses a watermarking method that reduces the gain of the wakermarked signal in order to compensate for bad perceptual quality.

A shortcoming of such prior art approaches is that, due to model approximations and imperfections, they do not maintain a constant perceptual quality of the information signal for a given embedding model.

It is an object of the present invention to improve the perceptual quality of the processed information signal.

The above and other problems are solved by a method and an arrangement as defined in claims 1 and 11 respectively.

By determining a measure of perceptual quality of the processed signal and adjusting the parameters controlling the watermarking process, the perceptual quality of the processed signal is improved.

It is an advantage of the invention that it provides an automatic control of the parameters controlling the signal watermarking, thereby providing a uniform perceptual quality of the processed signal.

The term information signal comprises any signal representing perceivable information which may be perceivably distorted by the signal processing. Examples of such signals include audio signals, video signals, multimedia signals, signals representing images, or the like. The information signal may be embodied as an analog signal or a digital signal.

The measure of perceptual quality may include any suitable quantity, parameter, or the like that is indicative of a perceivable change in the information content of the information signal caused by the signal modification process. Examples of such measures include a suitable cost function quantifying the artifacts of the signal processing in question. An example of a method for measuring the perceptual quality of audio signals is described in Thilo Thiede et al., "PEAQ - The ITU Standard for Objective Measurement of Perceived Quality", J. Audio Eng. Soc., Vol. 48, No. 1/2, 2000.

It is a further advantage of the invention that the automatic control is based on a perceptual measure, thereby taking into account the artifacts of the signal processing that influence the perceptual quality. Examples of such artifacts include a variation in bandwidth, noise loudness asymmetry, temporal masking behavior, or the like.

Hence, it is an advantage that artifacts may be considered other than those considered by the actual signal processing.

The step of comparing the processed signal with the information signal may comprise one or more processing steps of one or both of the signals, such as filtering steps, signal transformations, e.g. Fourier transformations, decoding steps, etc. Furthermore, the step of comparing may comprise any suitable processing steps for determining the measure of perceptual quality.

The adjusting of the control parameters may comprise any suitable control mechanism, e.g. a control loop comparing the measure of perceptual quality with a corresponding target value and correspondingly adjusting the control parameter, or the like. The adjustment may comprise an increase of the parameter, a decrease of the parameter, or the adjustment may comprise leaving the parameter unchanged.

Examples of control parameters include the embedding strength of a watermark signal, the embedding frame size in a frame-based embedding process of a watermark signal, a frequency/time allocation, a parameter controlling the bit allocation of a quantizer in an audio coder, etc.

Hence, the signal processing is performed on segments of the information signal. For example, when the information signal represents a signal as a function of time, such as an audio signal, a video signal, or the like, the signal processing may be performed on a frame basis. Hence, the signal is divided into a sequence of segments, the so-called frames, the individual frames are processed, and the processed frames are combined into a resulting processed signal. In other embodiments, e.g. where the information signal is a function of a spatial parameter, a similar segmenting may be performed, e.g. by dividing a signal representing image pixels into a sequence of rows of pixels, or the like.

Consequently, by comparing the processed signal segments with the corresponding segments of the information signal, the control parameter(s) controlling the signal processing may be adjusted for each segment individually.

It is understood that the first and second segments of the information signal may have the same or different lengths.

The adjusted parameters may be applied in the processing of a subsequent segment, preferably the next segment in the sequence of segments. Hence, in this case, the second segment of the information signal is a segment subsequent to the first segment of the information signal in the sequence of segments of the information signal, thereby providing a particularly simple implementation of a self-calibrating control mechanism.

In another preferred embodiment, the second segment of the information signal is the first segment of the information signal, the first segment of the information signal being delayed to compensate for a duration of the steps of comparing the processed signal with the information signal and of adjusting the at least one control parameter. Hence, according to this two-stage feed-forward embodiment, the segment which was the basis for the adjustment of the control parameters is delayed, and the signal processing based on the adjusted control parameters is applied to the first signal segment. Hence, the adjustment already takes affect for the current signal segment rather than delaying the effect of the adjustment to the next segment.

Consequently, the relative delay between the adjustment of the control parameters and the changes in the quality of the resulting processed signal is removed, thereby further improving the perceptual quality of processed signal. It is a further advantage of this embodiment that it avoids possible instabilities of the control feedback, e.g. in the case of non-stationary signals, such as audio, thereby further improving the quality of the signal processing.

The watermark embedding model and/or the embedding may be controlled by one or more control parameters that may be adjusted according to the invention, thereby improving the quality of the embedding process.

It is an advantage of the invention that it provides a watermark embedding with a uniform perceptual quality irrespective of a particular characteristic of the host signal, i.e. the signal into which the watermark is embedded.

It is noted that the features of the method described above and in the following may be implemented in software and carried out in a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

The present invention can be implemented in different ways including the method described above and in the following, an arrangement, and further product means, each yielding one or more of the benefits and advantages described in connection with the first-mentioned method, and each having one or more preferred embodiments corresponding to the preferred embodiments described in connection with the first-mentioned method and disclosed in the dependent claims.

The invention further relates to a device comprising an arrangement as described above and in the following.

The invention further relates to a processed information signal generated by performing the steps of the method described above and in the following.

The processed information signal may be embodied as a signal on a carrier wave, e.g. an electromagnetic wave. The information signal may further be embodied on a storage medium.

Examples of storage media include magnetic tape, optical disc, digital video disk (DVD), compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), synchronous dynamic random access memory (SDRAM), ferromagnetic memory, optical storage, charge coupled devices, smart cards, PCMCIA card, etc.

These and other aspects of the invention will be apparent and elucidated from the embodiments described in the following with reference to the drawing in which:
Fig. 1 shows a schematic block diagram of an arrangement for signal processing;
Figs. 2a-b show schematic block diagrams of examples of an arrangement for signal processing;
Fig. 3 shows a block diagram of an arrangement for embedding a watermark in an information signal according to an embodiment of the invention;
Fig. 4 shows a block diagram of an arrangement for embedding a watermark in an information signal according to another embodiment of the invention; and
Fig. 5 shows a block diagram of an arrangement for audio coding not related to the invention.

It is noted that, in the figures, dashed lines between blocks generally indicate control lines while full lines between boxes generally indicate data lines.

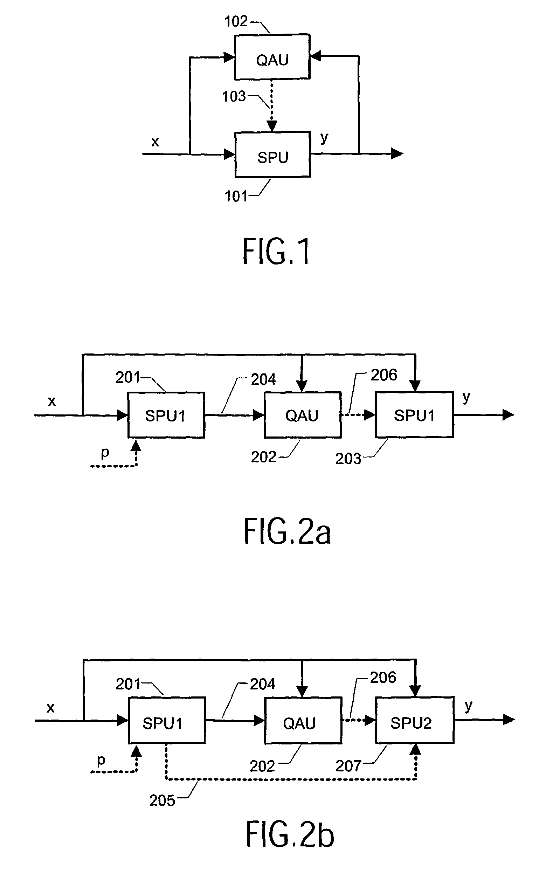

Fig. 1 shows a schematic block diagram of an arrangement for signal processing. The arrangement comprises a signal processing unit 101 that receives an information signal x, applies a signal modification process to the information signal x resulting in an output signal y, and outputs the signal y. The signal modification of the signal processing unit is controlled by one or more control parameters generated by a quality-assessing unit 102 and fed into the signal processing unit. The information signal x and the output signal y are fed into the quality-assessing unit 102. The quality assessing unit 102 compares the processed signal y with the information signal x and determines the perceptual quality of the processed signal compared to the information signal x, i.e. a measure of the extent to which a recipient of the information signal would perceive a distortion or other quality degradation of the processed signal y. The perceptual quality of an information signal may be quantified by one or more parameters, for example non-linear distortions, harmonic distortions, modulation differences, a mask-to-noise ratio, loudness asymmetry of an audio signal, etc.

Based on the determined perceptual quality of the processed signal y, the quality-assessing unit generates a control signal 103 which represents the control parameter(s) for controlling the signal processing unit. Hence, an on-line self-calibrating signal processing is provided.

Figs. 2a-b show schematic block diagrams of arrangements for signal processing.

The arrangement according to fig. 2a is implemented as a two-stage feed-forward circuit comprising a first signal processing unit 201, a quality-assessing unit 202, and a second signal processing unit 203. The first signal processing unit 201 receives the information signal x and generates a corresponding processed signal 204. The signal processing unit 201 is controlled by a default set of control parameters p. The processed signal is fed into the quality-assessing unit 202 which further receives the information signal x and generates a control signal 206 based on a determination of the perceptual quality of the processed signal 204, as described above.

According to this, the control signal generated by the quality assessing unit 202 is fed into the second signal processing unit 203. The second signal processing unit 203 also receives the information signal x and applies to it the same signal modification process as the first signal processing unit 201. However, the second signal processing unit 203 is controlled by the control signal 206 instead of the default parameters p. The second signal processing unit thus applies an optimized modification process with respect to the perceptual quality of the resulting processed signal. The processed signal y generated by the second signal processing unit thus constitutes the output of the arrangement.

It is noted that the default parameters p may be dynamically selected rather than statically, e.g. based on the output of the quality-assessing unit 202 or by some other control mechanism.

The arrangement according to fig. 2b is implemented as a two-stage feed-forward circuit comprising two different signal processing units 201 and 207. The first signal processing unit 201 performs the signal processing on the information signal x as described above, and the resulting processed signal is forwarded to the quality-assessing unit 202 which generates a control signal 206 based on a determination of the perceptual quality of the processed signal 204.

According to this, the second signal processing unit 207 only performs a part of the signal processing performed by the signal processing unit 201. Hence, according to this embodiment, the first signal processing unit 201 forwards a signal 205 to the second signal processing unit 207 where the signal 205 represents the result of a first processing stage which is not influenced by the control parameters p and 206, respectively. The second signal processing unit 207 only performs a second part of the signal processing controlled by the optimized parameters 206 and resulting in the final processed signal y. It is an advantage of this embodiment, that unnecessary repetitions of signal processing steps are voided, thereby reducing the processing time and the required complexity of the components.

It is understood that the above arrangements may comprise additional components, such as delay circuits for compensating for delays introduced by the various components.

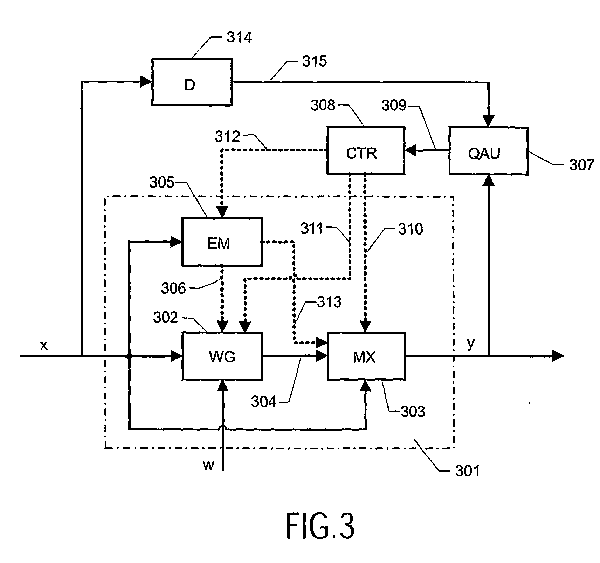

Fig. 3 shows a block diagram of an arrangement for embedding a watermark in an information signal according to an embodiment of the invention. The arrangement comprises a watermark embedder 301 that receives an audio signal x, embeds a watermark in the audio signal, and generates a resulting watermarked audio signal y. The watermark embedder 301 comprises a watermark generation module 302 that receives the audio signal x and generates a watermark signal 304 on the basis of a watermark w representing the information to be embedded. The watermark generation module 302 is controlled by an embedding model block 305 that receives the audio signal x, determines a predetermined cost function derived from the audio signal x and generates a control signal 306 controlling the watermark generation module 302. For example, the control signal may comprise parameters controlling one or more properties of the watermark generation process, such as the relative watermark energy embedded at different frequencies, window sizes for the segmenting of the signal, etc. The watermark embedder further comprises a mixing module 303 that receives the audio signal x and the watermark signal 304 generated by the watermark generation module 302. The mixing module combines the audio signal x and the watermark signal 304 resulting in the watermarked signal y. The embedding model 305 further generates a control signal 313 which is fed into the mixing module 303 and which controls the mixing of the watermarks signal and the audio signal. For example, the embedding model may determine the amount of watermark energy to be added to the audio signal based on the properties of the audio signal, e.g. the amount of noise that can be masked by the signal. This headroom is generally referred to as mask-to-noise ratio.

According to the invention, the audio signal x is delayed by a delay 314 to compensate for the delay introduced by the embedder 301. The delayed audio signal 315 and the watermarked signal y are fed into a quality-assessing unit 307. The quality-assessing unit 307 compares the watermarked signal y and the delayed audio signal 315 and passes a corresponding set of quality parameters 309 to a control unit 308. For example, the quality assessing unit 307 may implement a cost function that quantifies the artifacts of the watermark system or a more complex system, e.g. as described in Thilo Thiede et al., "PEAQ - The ITU Standard for Objective Measurement of Perceived Quality", J. Audio Eng. Soc., Vol. 48, No. 1/2, 2000. The quality parameters 309 quantify the perceptual quality of the watermarked audio signal y. Examples of such quality parameters include non-linear distortion, harmonic distortion, modulation difference, mask to noise ratio, loudness asymmetry, etc.

The control unit 308 converts the quality parameters 309 into appropriate control parameters for controlling the settings of the embedder 301. The control unit feeds control signals 310, 311, and 312 to the mixing module 303, the watermark generation module 302, and the embedding model 305, respectively. Each of the control signals comprises one or more of the control parameters generated by the control unit. For example, the control parameters may control embedding parameters such as the watermark embedding strength, the frame size, the time/frequency allocation, etc., or combinations of the above parameters. For example, if the measured quality is low, the settings of the embedding model and/or the watermark generation module and/or the mixing module are adjusted in a direction that improves the quality of the watermarked signal. On the other hand, if the quality is sufficiently high to allow a stronger embedding, the settings are adjusted as to allow more watermark energy to be embedded in the audio signal, thereby improving the robustness of the embedded watermark.

The above conversion of the quality parameters into control parameters may comprise a simple scaling, other simple conversion functions such as a mixing matrix, and/or more complex conversions, such as neural networks, statistical methods, or the like.

Hence, in this embodiment, the adjusted control parameters are used to determine the embedder settings for subsequent parts of the audio signal. For example, in a frame-based embedding system where the audio signal is divided into frames and the watermark is embedded in each of the frames, the control parameters adjusted based on the quality of a given frame of the watermarked signal are applied to the embedding of the watermark of the subsequent frame.

It is noted that in an alternative embodiment, the embedding model only controls one of the watermark generation module and the mixing module. Similarly, in alternative embodiments, the control unit may only forward control parameters to one or two of the modules of the watermark embedder.

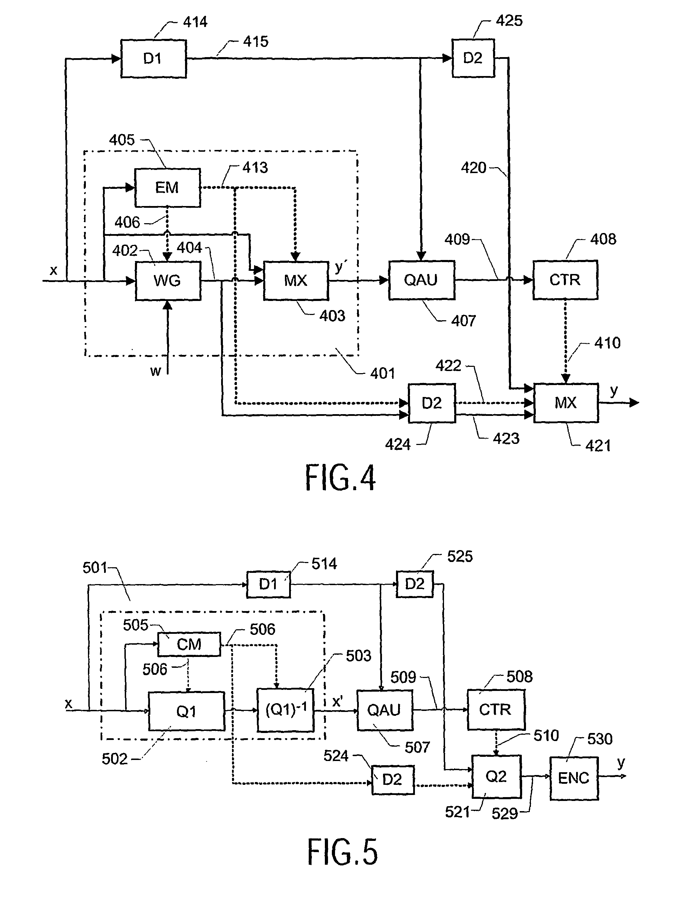

Fig. 4 shows a block diagram of an arrangement for embedding a watermark in an information signal according to another embodiment of the invention. The arrangement according to this embodiment implements a two-stage feed-forward mechanism.

The arrangement comprises a watermark embedder 401 comprising an embedding model 405, a watermark generation module 402, and a mixing module 403. The embedder 401 embeds a watermark w in an audio signal x resulting in a watermarked signal y' as described in connection with the embedder 301 in fig. 3 above. The watermarked signal y' is fed into the quality-assessing unit 407 which compares the watermarked signal y' with the delayed audio signal 415 generated by an appropriate delay 414 from the audio signal x. The quality-assessing unit 407 generates a set of quality parameters 409 and feeds them into a control unit 408 which, in turn, generates a set of control parameters 410, as was described in connection with the quality-assessing unit 307 and the control unit 308 of fig. 3 above.

According to this embodiment, the control unit does not control the embedder 401 but a separate mixing module 421. The mixing module 421 receives the delayed audio signal 420 which is suitably delayed by delays 414 and 425 in order to compensate for the delays introduced by the embedder 401 and the quality-assessing unit 407 and the control unit 408. The mixing module 421 further receives a delayed watermark signal 423 corresponding to the watermark signal 404 generated by the watermark generation module 402 and delayed by a delay 424. The delay 424 compensates for the delay introduced by the quality-assessing unit 407 and the control unit 408, and the delayed watermark signal 423 is fed into the mixing module 421. The mixing module 421 further receives the control signal 413 generated by the embedding model 405 for controlling the mixing process. Again, the control signal is delayed by the delay 424 resulting in a delayed control signal 422. The mixing module combines the delayed audio signal 420 with the delayed watermark signal 423 according to the control parameters 410 and the delayed control signal 422 from the embedding model, resulting in the watermarked signal y that constitutes the output of the arrangement.

Hence, according to this embodiment, the mixing stage of the embedding process is repeated where the mixing parameters of the repeated stage are set by the control circuit according to the perceptual parameters determined after the initial mixing.

It is an advantage of this embodiment that it provides an improved control of the embedding system, since it removes the relative delay between the controlling parameters and the controlled system. Consequently, the perceptual quality of the watermarked signal is further improved, and the risk of a non-stable feedback system is eliminated.

It is noted that such a feed-forward system is equivalent to a one-iteration feedback system where the delay between the control parameters and the signal itself is compensated.

Hence, in the above embodiments, self-calibrating watermark embedding systems are disclosed which provide a uniform quality of the watermarked signal. The strength of the watermark and/or the setting of the embedding algorithm are continuously adjusted using a quality-assessing unit so as to maintain a uniform audio quality.

It should be noted that the above-mentioned embodiments illustrate rather than limit the invention, and that those skilled in the art will be able to design many alternative embodiments without departing from the scope of the appended claims.

For example, in the above, the invention has mainly been described in connection with audio signals. It is understood, however, that it may also be applied to other information signals, such as video signals, multimedia signals, images, etc.

The invention can be summarized as follows. Disclosed is a method of watermarking an information signal comprising: applying a signal watermarking process to an information signal resulting in a watermarked signal, said signal watermarking process being controlled by at least one control parameter; comparing the processed signal with the information signal to determine a measure of perceptual quality of the processed signal; and adjusting said at least one control parameter in response to the determined measure of perceptual quality. The method is advantageously used in watermarking systems, that use a model of the Human Auditory or Visual System to control the watermark embedding depth, and that often fail to maintain a constant signal quality because they ignore other artifacts than the mask-to-noise ratio.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of watermarking an information signal, the method comprising:
- applying a signal watermarking process (101) to a first segment of an information signal resulting in a first watermarked segment (y), said signal watermarking process being controlled by at least one control parameter;
- comparing (102) said first watermarked segment with said first segment to determine a measure of perceptual quality of said watermarked segment;
- adjusting said at least one control parameter in response to the determined measure of perceptual quality;
- applying said watermarking process (101) to a second segment of said information signal resulting in a second watermarked segment, where said watermarking process being controlled by said at least one adjusted control parameter.

2. A method according to claim 1, further comprising dividing the information signal into a sequence of segments of the information signal.

3. A method according to claim 1, wherein the second segment of the information signal is a segment subsequent to the first segment of the information signal in the sequence of segments of the information signal.

4. A method according to claim 1, wherein the second segment of the information signal is the first segment of the information signal, the first segment of the information signal being delayed to compensate for a duration of the steps of comparing the watermarked signal with the information signal and of adjusting the at least one control parameter.

5. A method according to claim 1, further comprising:
- delaying the information signal to compensate for a duration of the steps of comparing the watermarked signal with the information signal and of adjusting the at least one control parameter; and
- applying at least a part of the signal watermarking process to the delayed information signal resulting in a modified watermarked signal, the at least part of the signal watermarking process being controlled by the adjusted at least one control parameter.

6. A method according to any one of claims 1 through 5, wherein the signal watermarking process comprises:
- determining a watermark signal according to a watermark embedding model;
- embedding the determined watermark signal in the information signal.

7. A method according to claim 4 or 5, wherein the signal watermarking process comprises:
- determining a watermark signal according to a watermark embedding model;
- embedding the determined watermark signal in the information signal;
wherein the step of embedding the determined watermark signal is controlled by the at least one control parameter; and wherein the step of applying at least a part of the signal watermarking process to the information signal comprises:
- delaying the information signal resulting in a delayed signal; and
- embedding the determined watermark signal in the delayed signal, the embedding being controlled by the adjusted at least one control parameter.

8. A method according to claim 6 or 7, wherein the information signal is an audio signal and the watermark embedding model comprises a psycho-acoustic model of the human auditory system.

9. A method according to any one of claims 1 through 5, wherein the information signal is an audio signal and the signal modification process comprises an audio coding process.

10. A method according to claim 4 or 5, wherein the information signal is an audio signal and the signal watermarking process comprises an audio coding process comprising:
- determining a bit-allocation pattern for coding audio signal; and
- performing a quantization of the audio signal according to the determined bit-allocation resulting in a quantized signal;
wherein the step of comparing the processed signal with the information signal comprises:
- reconstructing the audio signal from the quantized signal; and
- comparing the reconstructed signal with the audio signal;
wherein the step of adjusting said at least one control parameter comprises adjusting the bit-allocation;
and wherein the step of applying at least a part of the signal modification process to the information signal comprises:
- delaying the audio signal resulting in a delayed signal; and
- performing a quantization of the delayed signal according to the adjusted bit-allocation resulting in a processed quantized signal.

11. An arrangement for watermarking an information signal, the arrangement comprising:
- signal watermarking means for applying a signal watermarking process to a first segment of an information signal resulting in a first watermarked segment, said signal watermarking process being controlled by at least one control parameter;
- means for comparing said first watermarked segment with said first segment to determine a measure of perceptual quality of said watermarked segment; and
- means for adjusting said at least one control parameter in response to the determined measure of perceptual quality; and
- means for applying said watermarking process to a second segment resulting in a second wartermarked segment, where said watermarking process being controlled by said at least one adjusted control parameter.

12. A device comprising an arrangement according to claim 11.

13. A processed information signal generated by the method according to any one of claims 1 through 10.

## Patentansprüche

1. Verfahren zum Einbetten von Wasserzeichen in ein Informationssignal, wobei das Verfahren Folgendes umfasst:
- das Anwenden eines Signalwasserzeicheneinbettungsprozesses (101) auf ein erstes Segment eines Informationssignals, was zu einem ersten mit einem Wasserzeichen versehenen Segment (y) führt, wobei der genannte Einbettungsprozess durch wenigstens einen Steuerparameter gesteuert wird,
- das Vergleichen (102) des genannten ersten mit einem Wasserzeichen versehenen Segmentes mit dem genannten ersten Segment um ein Maß der perzeptuellen Qualität des genannten mit einem Wasserzeichen versehenen Segmentes zu ermitteln,
- das Einstellen des genannten wenigstens einen Parameters in Reaktion auf das ermittelte Maß der perzeptuellen Qualität,
- das Anwenden des genannten Wasserzeicheneinbettungsprozesses (101) auf ein zweites Segment des genannten Informationssignals, was zu einem zweiten mit einem Wasserzeichen versehenen Segment führt, wobei der genannte Einbettungsprozess durch den genannten einen eingestellten Steuerparameter gesteuert wird.

2. Verfahren nach Anspruch 1, das weiterhin das Aufteilen des Informationssignals in eine Folge von Segmenten des Informationssignals umfasst.

3. Verfahren nach Anspruch 1, wobei das zweite Segment des Informationssignals ein Segment hinter dem ersten Segment des Informationssignals in der Folge von Segmenten des Informationssignals ist.

4. Verfahren nach Anspruch 1, wobei das zweite Segment des Informationssignals das erste Segment des Informationssignals ist, wobei das erste Segment des Informationssignals verzögert wird um eine Dauer der Schritte zum Vergleichen des mit einem Wasserzeichen versehenen Signals mit dem Informationssignal und zum Einstellen des wenigstens einen Steuerparameters zu kompensieren.

5. Verfahren nach Anspruch 1, das weiterhin Folgendes umfasst:
- das Verzögern des Informationssignals zum Kompensieren einer Dauer der Schritte zum Vergleichen des mit einem Wasserzeichen versehenen Signals mit dem Informationssignal und zum Einstellen des wenigstens einen Steuerparameters, und
- das Anwenden wenigstens eines Teils des Wasserzeicheneinbettungsprozesses auf das verzögerte Informationssignal, was zu einem modifizierten mit einem Wasserzeichen versehenen Signal führt, wobei wenigstens ein Teil des Einbettungsprozesses von dem eingestellten wenigstens einen Steuerparameter gesteuert wird.

6. Verfahren nach einem der Ansprüche 1 bis 5, wobei der Wasserzeicheneinbettungsprozess Folgendes umfasst:
- das Ermitteln eines Wasserzeichensignals entsprechend einem Wasserzeicheneinbettungsmodell,
- das Einbetten des ermittelten Wasserzeichensignals in das Informationssignal.

7. Verfahren nach Anspruch 4 oder 5, wobei der Wasserzeicheneinbettungsprozess Folgendes umfasst:
- das Ermitteln eines Wasserzeichensignals entsprechend einem Wasserzeicheneinbettungsmodell,
- das Einbetten des ermittelten Wasserzeichensignals in das Informationssignal,
wobei der Schritt der Einbettung des ermittelten Wasserzeichensignals durch den wenigstens einen Steuerparameter gesteuert wird und wobei der Schritt der der Anwendung wenigstens eines Teils des Wasserzeicheneinbettungsprozesses auf das Informationssignal Folgendes umfasst:
- das Verzögern des Informationssignals, was zu einem verzögerten Signal führt, und
- das Einbetten des ermittelten Wasserzeichensignals in das verzögerte Signal, wobei das Einbetten durch den eingestellten wenigstens einen Steuerparameter gesteuert wird.

8. Verfahren nach Anspruch 6 oder 7, wobei das Informationssignal ein Audiosignal ist und das Wasserzeicheneinbettungsmodell ein psychoakustisches Modell des menschlichen Hörsystems umfasst.

9. Verfahren nach einem der Ansprüche 1 bis 5, wobei das Informationssignal ein Audiosignal ist und der Signalmodifikationsprozess einen Audiocodierungsprozess umfasst.

10. Verfahren nach Anspruch 4 oder 5, wobei das Informationssignal ein Audiosignal ist und der Wasserzeicheneinbettungsprozess einen Audiocodierungsprozess umfasst, der Folgendes umfasst:
- das Ermitteln eines Bitzuordnungsmusters zur Codierung des Audiosignals, und
- das Durchführen einer Quantisierung des Audiosignals entsprechend der ermittelten Bitzuordnung, was zu einem quantisierten Signal führt,
wobei der Schritt des Vergleichs des verarbeiteten Signals mit dem Informationssignal Folgendes umfasst:
- das Rekonstruieren des Audiosignals aus dem quantisierten Signal, und
- das Vergleichen des rekonstruierten Signals mit dem Audiosignal,
wobei der Schritt der Einstellung des genannten wenigstens einen Parameters das Einstellen der Bitzuordnung umfasst, und
wobei der Schritt der Anwendung wenigstens eines Teils des Signalmodifikationsprozesses auf das Informationssignal Folgendes umfasst:
- das verzögern des Audiosignals, was zu einem verzögerten Signal führt, und
- das Durchführen einer Quantisierung des verzögerten Signals entsprechend der eingestellten Bitzuordnung, was zu einem verarbeiteten quantisierten Signal führt.

11. Anordnung zur Wasserzeicheneinbettung in ein Informationssignal, wobei die Anordnung Folgendes umfasst:
- Wasserzeicheneinbettungsmittel zum Anwenden eines Wasserzeicheneinbettungsprozesses auf ein erstes Segment eines Informationssignals, was zu einem ersten mit einem Wasserzeichen versehenen Segment führt, wobei der genannte Wasserzeicheneinbettungsprozess durch wenigstens einen Steuerparameter gesteuert wird,
- Mittel zum vergleichen des genannten ersten mit einem Wasserzeichen versehenen Segmentes mit dem genannten ersten Segment zum Ermitteln eines Maßes der perzeptuellen Qualität des genannten mit einem Wasserzeichen versehenen Segmentes, und
- Mittel zum Einstellen des genannten wenigstens einen Steuerparameters in Reaktion auf das ermittelte Maß der perzeptuellen Qualität; und
- Mittel zum Anwenden des genannten Wasserzeicheneinbettungsprozesses auf ein zweites Segment, was zu einem zweiten mit einem Wasserzeichen versehenen Segment führt,
wobei der genannten Wasserzeicheneinbettungsprozess durch den genannten wenigstens einen eingestellten Steuerparameter gesteuert wird.

12. Gerät mit einer Anordnung nach Anspruch 11.

13. Verarbeitetes Informationssignal, erzeugt nach dem Verfahren nach einem der Ansprüche 1 bis 10.

## Revendications

1. Procédé de filigranage d'un signal d'informations, le procédé comprenant :
- l'application d'un processus de filigranage de signal (101) à un premier segment d'un signal d'informations ce qui donne un premier segment filigrané (y), ledit processus de filigranage étant commandé par au moins un paramètre de commande;
- la comparaison (102) dudit premier segment filigrané avec ledit premier segment pour déterminer une mesure de la qualité perceptuelle dudit segment filigrané;
- l'ajustement dudit au moins un paramètre de commande en réaction à la mesure déterminée de la qualité perceptuelle;
- l'application du processus de filigranage (101) à un second segment dudit signal d'information ce qui donne un second segment filigrané, ledit processus de filigranage étant commandé par ledit au moins un paramètre de commande ajusté.

2. Procédé suivant la revendication 1, comprenant en outre la division du signal d'informations en une séquence de segments du signal d'informations.

3. Procédé suivant la revendication 1, dans lequel le second segment du signal d'informations est un segment subséquent au premier segment du signal d'informations dans la séquence de segments du signal d'informations.

4. Procédé suivant la revendication 1, dans lequel le second segment du signal d'informations est le premier segment du signal d'informations, le premier segment du signal d'informations étant retardé pour compenser une durée des étapes de comparaison du signal filigrané avec le signal d'informations et d'ajustement du au moins un paramètre de commande.

5. Procédé suivant la revendication 1, comprenant en outre :
- le retardement du signal d'informations afin de compenser une durée des étapes de comparaison du signal filigrané avec le signal d'information et d'ajustement du au moins un paramètre de commande; et
- l'application d'au moins une partie du processus de filigranage de signal au signal d'informations retardé ce qui donne un signal filigrané modifié, la au moins une partie du processus de filigranage de signal étant commandée par le au moins un paramètre de commande ajusté.

6. Procédé suivant l'une quelconque des revendications 1 à 5 dans lequel le processus de filigranage de signal comprend :
- la détermination d'un signal de filigrane conformément à un modèle d'incorporation de filigrane;
- l'incorporation du signal de filigrane déterminé dans le signal d'informations.

7. Procédé suivant la revendication 4 ou 5, dans lequel le processus de filigranage de signal comprend :
- la détermination d'un signal de filigrane suivant un modèle d'incorporation de filigrane;
- l'incorporation du signal de filigrane déterminé dans le signal d'informations :
dans lequel l'étape d'incorporation du signal de filigrane déterminé est commandée par le au moins un paramètre de commande; et dans lequel l'étape d'application d'au moins une partie du processus de filigranage de signal au signal d'informations comprend :
- le retardement du signal d'informations produisant un signal retardé; et
- l'incorporation du signal de filigrane déterminé dans le signal retardé, l'incorporation étant commandé par le au moins un paramètre de commande ajusté.

8. Procédé suivant la revendication 6 ou 7, dans lequel le signal d'informations est un signal audio et le modèle d'incorporation de filigrane comprend un modèle psycho-acoustique du système auditif humain.

9. Procédé suivant l'une quelconque des revendications 1 à 5, dans lequel le signal d'informations est un signal audio et le processus de modification de signal comprend un processus de codage audio.

10. Procédé suivant la revendication 4 ou 5, dans lequel le signal d'informations est un signal audio et le processus de filigranage de signal comprend un processus de codage audio comportant :
- la détermination d'un motif d'attribution de bits pour coder le signal audio; et
- l'exécution d'une quantification du signal audio suivant l'attribution de bits déterminée produisant un signal quantifié;
dans lequel l'étape de comparaison du signal traité avec le signal d'informations comprend :
- la reconstruction du signal audio à partir du signal quantifié; et
- la comparaison du signal reconstruit avec le signal audio;
dans lequel l'étape d'ajustement dudit au moins un paramètre de commande comprend l'ajustement des attributions de bits;
et dans lequel l'étape d'application d'au moins une partie du processus de modification de signal au signal d'informations comprend :
- le retardement du signal audio produisant un signal retardé; et
- l'exécution d'une quantification du signal retardé suivant l'attribution de bits ajustée produisant un signal quantifié traité.

11. Montage pour le filigranage d'un signal d'informations, le montage comprenant :
un moyen de filigranage de signal pour appliquer un processus de filigranage de signal à un premier segment d'un signal d'informations produisant ainsi un premier segment filigrané, ledit processus de filigranage de signal étant commandé par au moins un paramètre de commande;
un moyen pour comparer ledit premier segment filigrane avec ledit premier segment afin de déterminer une mesure de la qualité perceptuelle dudit segment filigrané; et
un moyen pour ajuster ledit au moins un paramètre de commande en réaction à la mesure déterminée de la qualité perceptuelle; et
un moyen pour appliquer ledit processus de filigranage à un second segment produisant ainsi un second segment filigrané, ledit processus de filigranage étant commandé par ledit un paramètre de commande ajusté.

12. Dispositif comprenant un montage suivant la revendication 11.

13. Signal d'informations traité généré par le procédé suivant l'une quelconque des revendications 1 à 10.
